# EUROPEAN PATENT APPLICATION

(11) **EP 2 762 613 A1**
(43) Date of publication of application: **06.08.2014**
(21) Application number: 14250012.3
(22) Date of filing: 29.01.2014
(51) Int. Cl.: C25B 15/00, C25B 15/02, C25B 1/06, C25B 9/00, C25B 9/04

(54) **A fuel system**

(30) Priority: 01.02.2013 GB 201301783
(71) Applicant: Hydrotekniks Group Holding Limited, Buckinghamshire HP18 0NF (GB)
(72) Inventor: Chambers, Timothy, Waddesdon, Buckinghamshire (GB); Bennet, Domenico, Aylesbury, Buckinghamshire HP21 7AD (GB)
(74) Representative: Turner, Richard Charles

(57) **Abstract**

A fuel system 100 comprises a gas generator 10 operable to generate hydrogen and oxygen gas 40 using electrolysis of an electrolyte 38, a fluid reservoir 32 connected to the gas generator 10 and arranged to supply the electrolyte 38 to the gas generator 10, a power regulator 102 connected to an power supply 134 and arranged to regulate the received power from the power supply 134, and a system control device 104 connected to the power regulator 102 and the gas generator 10, arranged to control the power supplied to the gas generator 10 from the power regulator 102 and arranged to periodically reverse the polarity of the power supplied to the gas generator.

## Description

This invention relates to a fuel system and to a method of operating the fuel system.

The generation of gas via electrolysis has been known since at least 1800, when William Nicholson and Johann Ritter decomposed water into hydrogen and oxygen. Electrolysis is the passage of a direct electric current through an ionic substance that is either molten or dissolved in a suitable solvent, resulting in chemical reactions at the electrodes and separation of materials. The main components required to achieve electrolysis are an electrolyte, which is a substance containing free ions that are the carriers of electric current in the electrolyte, a direct current (DC) supply, which provides the energy necessary to create or discharge the ions in the electrolyte and two electrodes, which provide an electrical conductor that provides the physical interface between the electrical circuit providing the energy and the electrolyte.

United State of America Patent US 8,303,798 B2 discloses a hydrogen generator designed for use with gas and diesel engines. The Patent discloses a unit that produces hydrogen gas (Brown's gas (HHO)) that can be used as an assist to diesel and gas engines. The gas is produced from distilled water, using a stainless steel plate design. The internal design of the unit allows it to produce significantly more hydrogen, drawing significantly less current or electricity from its power source. The internal design is in the placement of positive, negative and neutral plates to produce the gas. However, the complexity of the design of the hydrogen generator disclosed in this Patent is relatively expensive to construct and the inefficiency of the gas collection in the generator is not ideal as a functioning gas generator, which means that the power required to drive the gas generator is not sufficiently greater than the extra fuel efficiency provide by the Brown's gas.

It is therefore an object of the invention to improve upon the known art.

According to a first aspect of the present invention, there is provided a fuel system comprising a gas generator operable to generate hydrogen and oxygen gas using electrolysis of an electrolyte, a fluid reservoir connected to the gas generator and arranged to supply the electrolyte to the gas generator, a power regulator connected to a power supply and arranged to regulate the received power from the power supply, and a system control device connected to the power regulator and the gas generator, arranged to control the power supplied to the gas generator from the power regulator and arranged to periodically reverse the polarity of the power supplied to the gas generator.

According to a second aspect of the present invention, there is provided a method of operating a fuel system, the method comprising the steps of generating hydrogen and oxygen gas from a gas generator using electrolysis of an electrolyte, supplying the electrolyte to the gas generator from a fluid reservoir connected to the gas generator, regulating the received power from a power supply at a power regulator connected to the power supply, controlling the power supplied to the gas generator from the power regulator using a system control device connected to the power regulator and the gas generator, and periodically reversing the polarity of the power supplied to the gas generator.

Owing to the invention, it is possible to provide a fuel system that will produce hydrogen and oxygen for use in an combustion chamber, while regulating the power received from a power source. This allows the fuel system to be used for example with the alternator of a vehicle without requiring any modification of the vehicle electrics and without drawing power from the alternator in a manner that could flatten the vehicle battery. The system control device is arranged to periodically reverse the polarity of the power supplied to the gas generator. By reversing the polarity, every thirty minutes, for example, the gas generator will reverse the flow of gas being generated within the gas generator and this changes the particulate build-up on the cathode plates and maintains good levels of gas production. This will also help reduce any build-up on the metal plates within the gas generator that would otherwise reduce the effectiveness of the electrolytic process.

Advantageously, the gas generator comprises one or more watertight and airtight units comprising a gas collector provided with a gas outlet on a top surface thereof, a plurality of metal plates, at least one metal plate located on each side of the gas collector, and each provided with at least one hole in an upper region of the plate and at least one hole in a lower region of the plate, two end plates, located at opposite ends of the unit, and a plurality of non-conductive spacers preferably with O-rings located so that each metal plate has a spacer with O-rings on each side. The spacer is a non conductive hard formed material with an O-ring on either side to create an air/fluid seal and to maintain a fixed gap of equal spacing between metal plates to optimise electrolysis and therefore consistent gas production. The gas generator efficiently produces gas from an electrolyte and efficiently captures the produced gas using a central gas collector. The gas collector and the arrangement of metal plates either side of the gas collector ensure that there is an unrestricted flow of liquid in the unit and that the gas produced via the electrolysis can easily escape through the central gas collector. The design of prior art gas collectors is such that restrictions in the fluid flows within the generator inhibit the rate at which the gas can be generated. The improved gas collector does not suffer from this inhibition of fluid flow within the gas generator.

Preferably, the system control device is connected to the fluid reservoir and is arranged to detect the fluid level in the fluid reservoir. The system control device can also monitor the fluid level in the fluid reservoir in order to issue an alert when the level is too low. If the fluid level is detected to be empty, then the system control device will shut down the fuel system. The system control device also has connections to and controls a HHO gas leak detection and low pressure sensors which would also shut the system down under either of the aforementioned conditions if they should arise. The system control device can also be connected to the power source and monitor the available power at the power source and will draw power from the power source only if sufficient power is available. This provides additional protection for the power source, which could be the alternator or batteries of a vehicle or any other hydrocarbon power plant. The system control device will prevent undesirable loading of the power source, which could otherwise result in too much power being drawn that would leave insufficient power available for the primary purpose of the power source.

Advantageously, the fuel system is provided with two anti-flash back arrestors including non-return valves and a fluid flow valve between the fluid reservoir and the hydrocarbon power plant. These safety features prevent liquid escaping from the fluid reservoir to the hydrocarbon combustion chamber that is being supplied with the gas from the gas generator and also prevent any flash or spark travelling back from the hydrocarbon combustion chamber to the fluid reservoir.

Preferably, the fluid reservoir is provided with a fluid inlet, the fluid inlet located on a side of the fluid reservoir below the top of the fluid reservoir. The positioning of the fluid inlet below the top of the fluid reservoir prevents the over filling of the fluid reservoir, as there will always be gas space present within the reservoir above the level of the fluid inlet.

In relation to the gas generator, preferably the gas collector, the metal plates and the end plates are all substantially rectangular (preferably square) and are all arranged in substantially parallel vertical planes. This provides the simplest design of the unit of the gas generator. The components of the gas generator are essentially arranged parallel to each other in a horizontal row, with the spacer with O-rings separating the different components.

Advantageously, the gas collector is further provided with a fluid inlet in a lower region of the gas collector and the fluid reservoir is connected to the fluid inlet. The electrolyte can be supplied directly to the gas generator via a fluid inlet in the gas collector. This enables the gas generator to be kept filled with electrolyte as the electrolysis occurs, which causes some of the liquid to be turned into gas as the process continues. By introducing the replacement electrolyte into the central gas collectors, this assists in the flow of fluid in the gas generator, pushing liquid out from the centre of the gas collector and causing the gas to flow towards the centre and out of the gas collector.

Ideally, the power supply is connected to one metal plate on each side of the gas collector and the gas generator is provided with a plurality of metal plates on both sides of the gas collector and at least one metal plate on each side of the gas collector is not connected to the power supply. Each metal plate that is connected to the power supply comprises a connecting tag, located at a bottom edge of the metal plate, to which the power supply is connected. The provision of multiple metal plates, some of which are neutral and not connected to the power supply provides a means of delivering the electrolysis in the gas generator and allows the fluid in the gas generator to flow through the holes in the metal plates.

Preferably, the gas collector has an internal profile of a funnel shape, with sloping sides and rounded corners sloping upwards to the gas outlet which feeds into the gas containment area of the fluid reservoir. The central gas collector collects the gas that is generated by the electrolysis of the electrolyte within the gas generator. The gas outlet from the collector is centrally located on the top surface and the internal sloping sides funnel the gas upwards to the gas outlet. This provides an effective and efficient removal of the gas from the gas generator as it is produced by the electrolysis into the gas containment area of the fluid reservoir.

Embodiments of the present invention will now be described, by way of example only, with reference to the accompanying drawings, in which:-
Figure 1 is a schematic diagram of a fuel system,
Figure 2 is a front view of one embodiment of the fuel system,
Figure 3 is a side section of the fuel system of Figure 2,
Figure 4 is a schematic diagram of the fuel system connected to an engine,
Figure 5 is a side view of a gas generator of the fuel system,
Figure 6 is a perspective view of two metal plates of the gas generator,
Figure 7 is a schematic diagram of the gas generator,
Figure 8 is a vertical cross-section through a gas collector of the gas generator, and
Figure 9 is a perspective exploded view of two metal plates, an end plate and part of the gas collector of the gas generator.

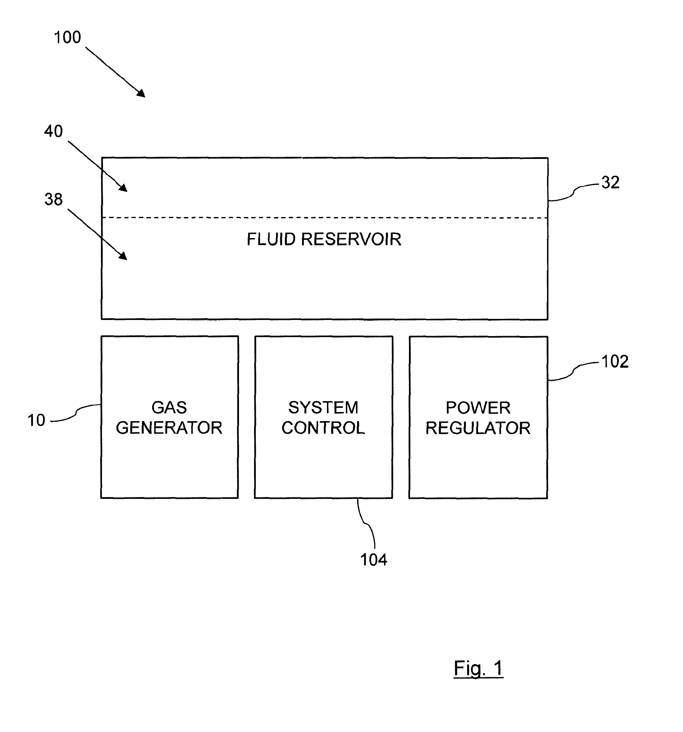

Figure 1 shows a schematic diagram of the fuel system 100. The fuel system 100 comprises a gas generator 10, which is operable to generate hydrogen and oxygen gas 40 using electrolysis of an electrolyte 38, a fluid reservoir 32, which is connected to the gas generator 10 and arranged to supply the electrolyte 38 to the gas generator 10, a power regulator 102, which is connected to a power supply and arranged to regulate the received power from the power supply and a system control device 104, which is connected to the power regulator 102 and the gas generator 10 and arranged to control the power supplied to the gas generator 10 from the power regulator 102. The power regulator will ensure that no more than 36A is drawn from the power supply. The gas generator 10 is gravity fed with the electrolyte 38 from the fluid reservoir 32 and the produced gas 40 is fed back to the fluid reservoir 32.

The fuel system 100 is intended to be used in a combustion system, for example a suitable vehicle such as a lorry or boat, or in a heating system such as a gas fired boiler used domestically or commercially. If the fuel system 100 is to be used in a combustion system, then the gas generated, which is a mixture of hydrogen and oxygen, is delivered as close as possible to the fuel ignition of the internal combustion engine. Since all combustion systems require oxygen to function, then in general there will be an air inlet to the combustion system that can be used to deliver the gas output to the ignition.

The gas outlet of the fuel system 100 can be connected to the air inlet of the combustion system and this will provide the hydrogen and oxygen produced by the gas generator 10 directly into that combustion system, in order to improve the efficiency of that combustion system (by between 10% and 50%) and also to reduce the ultimate pollution output of that system. The source of power, for example, can be the alternator or another source of DC power of the vehicle to which the fuel system is attached. The system control device 104 is responsible for the control of the power into the fuel system 100 and ensures that power is only drawn from the power source when it is safe to do so. For example, the system control device 104 will sense and wait until the battery is at an optimum level whether 12 or 24 volts and the alternator is producing at least 14.2 or 26.6 volts is available from the power source before drawing any power.

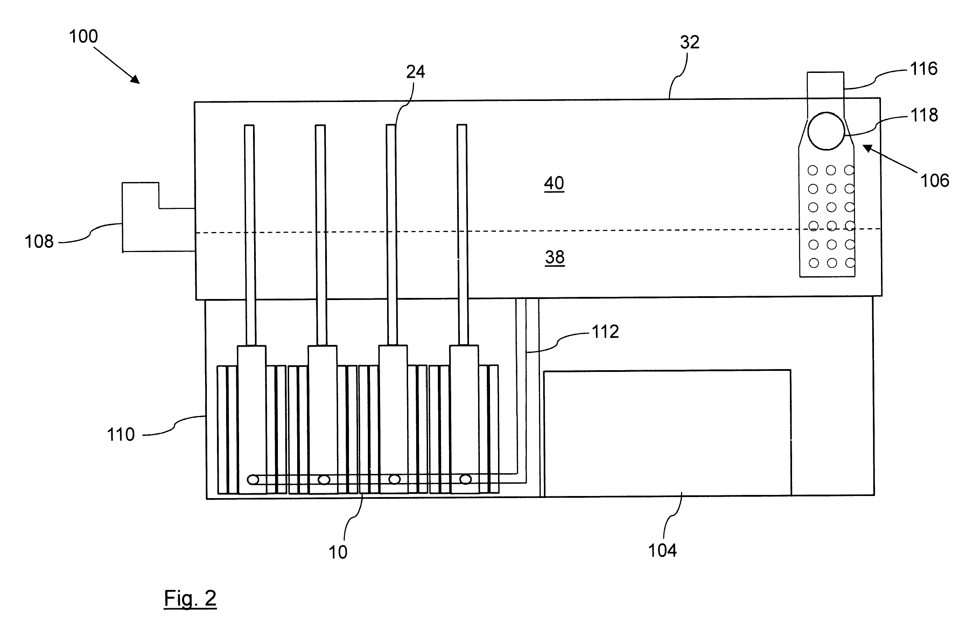

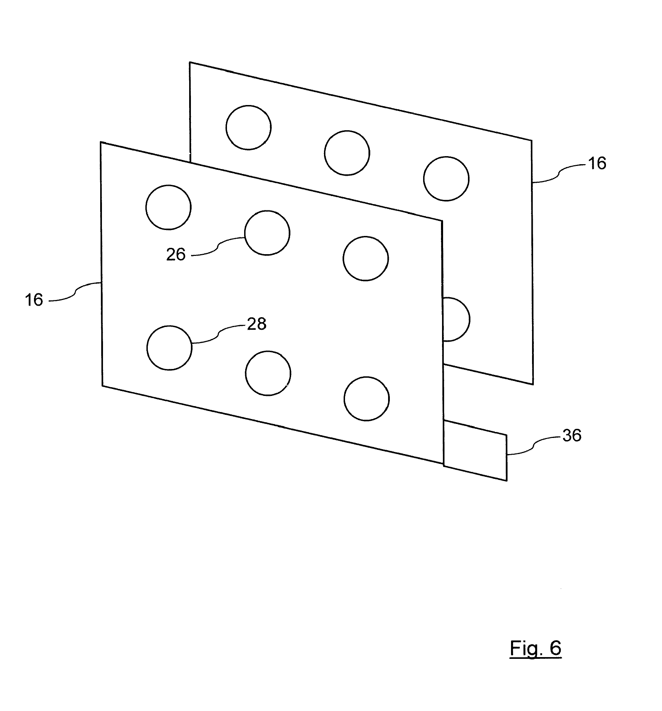

The fuel system 100 is contained in a single box 110, as shown in Figure 2, which shows a front view of the fuel system 100. The box 110 contains the fluid reservoir 32 at the top, which has a fluid inlet 108 located on a side of the fluid reservoir 32 below the top of the fluid reservoir 32. The fuel system 100 of Figure 2 comprises a gas generator 10 comprised of four individual units which are arranged in a row. A single pipe 112 from the fluid reservoir 32 supplies electrolyte 38 to the gas generator 10. The gas generator 10 outputs the generated gas 40 via gas outlets 24. The design and functioning of the gas generator 10 is described in more detail below with reference to Figures 6 to 10. A main gas outlet 116 is also shown, which delivers the gas 40 from the fuel system 100 to the location where it will be used, such as the combustion point of hydrocarbon fuel engine, on a boat, for example. A non-return valve 106, using a ball 118, is provided within the main gas outlet 116 to prevent the electrolyte 38 from spilling out through the main gas outlet 116 into the combustion area.

The key principles of the process of the fuel system 100 are as follows. An electrical power source is used to energise the gas generator 10, which in turn initiates and continues to operate the electrolytic process for the production of HHO. The system control device 104 provides monitoring and control of the power source to optimise power demand and to safeguard the power source. The system control device 104 also controls the polarity demands by periodically reversing polarity to the gas generator 10, with a purging effect. The system control device 104 also monitors and controls safety features of the process in marine, gas applications (domestic/industrial), incinerators and anaerobic digesters by providing low fuel warning, fail safe and shut off.

This process is to produce HHO gas to improve fuel efficiency of economy and noxious outputs in a controlled manner. The gas generator 10 provides a low pressure inductive input to a hydrocarbon fuel stream which is regulated as an input to the combustion unit. Thereby this inclusion creates an improved burn process which minimises noxious residue and less carbon emission. The additional benefit is the fuel efficiency in the burn which produces a more complete burn process. The fuel system 100 is provided with an internal power source or is connected to an external power source to supply the DC current to the gas generator 10 to power the electrolytic process.

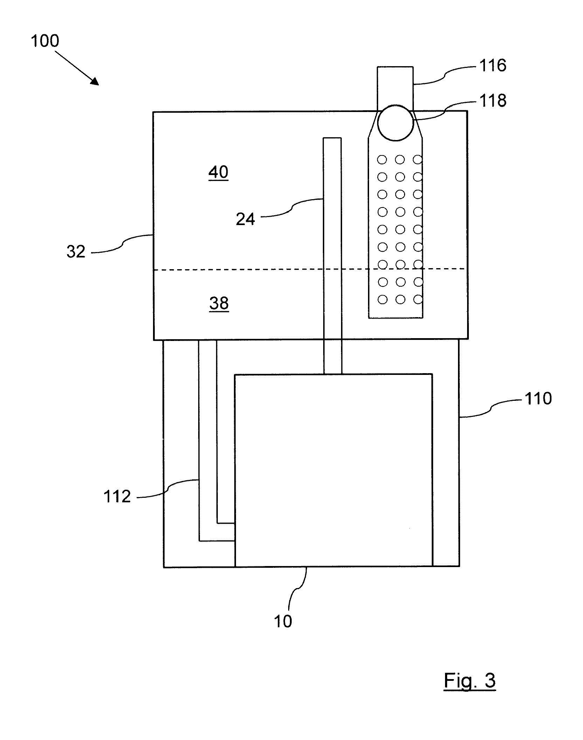

Figure 3 shows a side section of the fuel system 100. The box 110 can be seen, with the upper part of the box 110 containing the fluid reservoir 32 and the lower part of the box 110 containing the gas generator 10. The pipe 112 can be seen, which connects the fluid reservoir 32 to the gas generator 10. A single gas outlet 24 from the gas generator 10 is also shown. The gas generator 10 is below the fluid reservoir 32 and is gravity fed with electrolyte 38 from the fluid reservoir 32. As electrolysis is performed in the gas generator 10, then the gas 40 produced is outputted from the gas outlets 24 and is stored in the upper part of the fluid reservoir 32. The main gas output 116 delivers the gas 40 to the location where it will be used. The ball 118 can be seen within the main gas outlet 116, which prevents the electrolyte 38 exiting the fluid reservoir 32 via the main gas outlet 116.

The gas generator 10 is of a construction which optimises the gas production in a controlled and monitored environment. The gas generator 10 has metal plates of a perforated structure, with the top and bottom number of holes varying according to the application. These metal plates are separated by non-conductive spacers with O-rings and the metal plates are connected in groups of four, separated by a gas collector. The four metal plates assist in the circulation of the electrolyte 38 and the gas 40, and the gas 40 is then delivered into the hydrocarbon fuel source. The preferred point of introduction of the hybrid gaseous substance emitted by the gas generator 10 is presented into the induction air stream.

Each unit of the gas generator 10 comprises two plates plus one gas collector plus two plates which equals one cell and these are terminated either side by end non conductive plates. The units are combined to increase or decrease the gas production which is optimised based on application. In the embodiment of Figures 2 and 3 there are four such units in a row, which are independent of each other, apart from the single pipe 112 supplying electrolyte to all of the units. For each unit of the gas generator 10, the electrical power supply is delivered to electrical tags which are at the base level of the plate. This is a result of monitoring of the convection flow of the gaseous state of fluid to create an optimal production of HHO. Power is not necessarily supplied to all cells straightaway. Once the system control device 104 detects that sufficient power is available from the external power source (12.6V for example), then half of the available cells will be powered. Every six minutes a check will be made to see if the available power has risen to 13.8V at which point all of the cells will be powered.

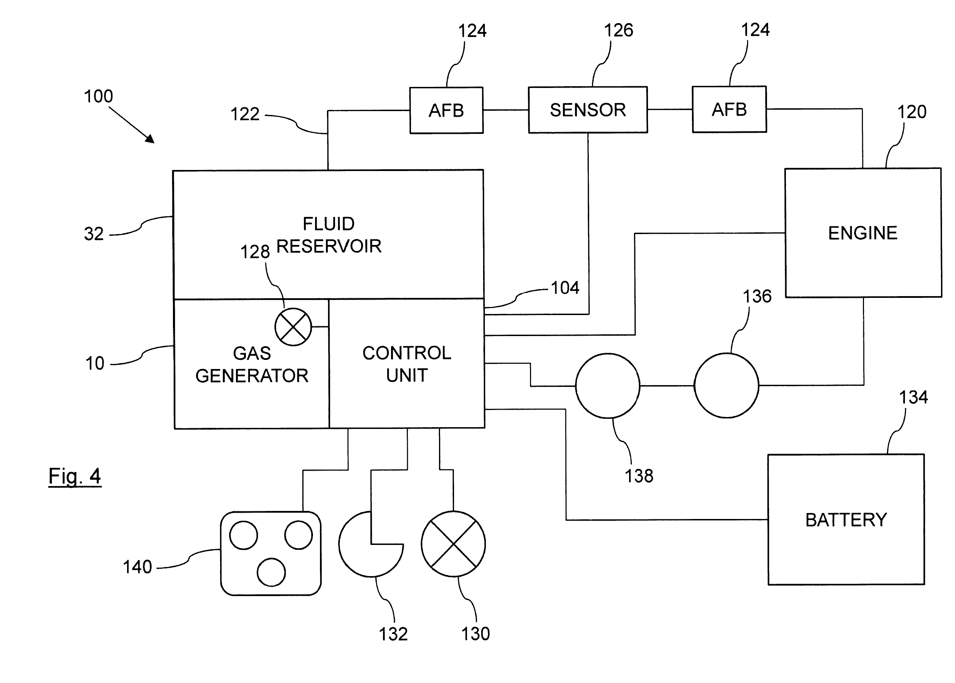

Figure 4 illustrates various safety features of the fuel system 100, showing it connected to an engine 120. The main gas output 116 delivers the gas 40 from the fluid reservoir 32 to the combustion chamber of the engine 120 via a gas line 122. Present on this gas line 122 are two anti-flashback devices 124 and a low pressure sensor 126. The anti-flashback devices 124 prevent any spark or flame passing back from the engine 120 to the fluid reservoir 32 and the low pressure sensor 126 detects any drop in pressure (indicative of a leak in the system) and communicates that reading to the system control device 104.

Also connected to the system control device 104 are an (optional) internal sniffer 128 and an external sniffer 130, which detect the presence of gas and will warn the system control device 104 if unexpected gas is detected, again implying that there is a gas leak somewhere. Also connected to the system control device 104 is a system clock 132 which provides a visual output of the length of time that the fuel system 100 has been supplying the gas 40 to the engine 120. The system control device 104 can also be connected to the vehicle battery 134 to monitor the condition of the battery 134, monitoring the level of charge present and the rate of charging, for example. The system control device can also be connected directly to the engine 120 in order to monitor the condition of the alternator on the engine 120.

The engine 120 can also have a fuel flow monitor 136 and a telematic GPS device 138 connected to the system control device 104 in order to monitor the fuel used and distance travelled by the engine 120. A display 140 can be connected to the system control device 104 to provide visual feedback on the operation of the fuel system 100, for example if any warning states are present, such as a low level of electrolyte 38 in the reservoir 32, a drop in gas pressure in the gas line 122 or the presences of gas detected by either of the sniffers 128 and 130.

The fluid reservoir 32 has internal anti surge baffles. The fluid inlet 108 of the fluid reservoir 32 is positioned in a manner which will not allow the fluid reservoir 32 to be overfilled with the electrolyte 38. An additional safety feature is the floating ball valve formed of the ball 118 in a perforated tube to prevent the electrolyte 38 from flowing forward towards the engine 120. The reservoir 32 also has an additional volume of electrolytic fluid indicator to determine fluid level for of non-dry burn out of the gas generator components. An external visual fluid indicator can also be provided. There will be inlet ports at a high level to accept the gas output of the gas generator 10 which will maintain and stabilise the gas to be passed under pressure.

The system control device 104 controls the operation of the fuel system 100. The principal role of the system control device 104 is to monitor the operation of the other main components, the gas generator 10, the fluid reservoir 32 and the power (voltage) regulator 102. Power is only supplied to the gas generator 10 when sufficient power is available from the power source and the system control device 104 determines how many of the units within the gas generator 10 can be powered, based upon the amount of power available from the power source. Once sufficient power is available, all of the units in the gas generator 10 will be powered.

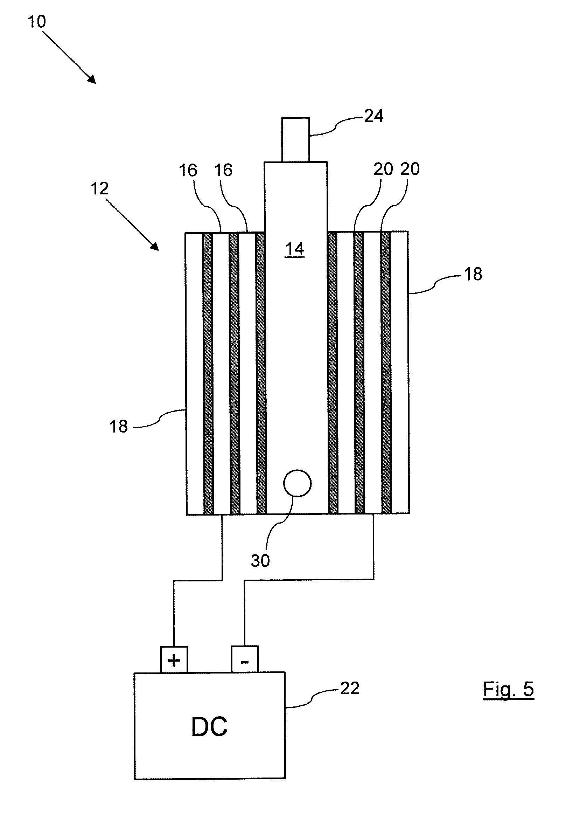

Figure 5 shows a side view of the gas generator 10, which comprises a watertight and airtight unit 12 and a power supply 22. The unit 12 comprises a gas collector 14, metal plates 16, two end plates 18 and a plurality of non-conductive spacers with O-rings 20, located so that each metal plate 16 has a spacer 20 on each side. The gas collector 14, the metal plates 16 and the end plates 18 are all substantially rectangular and are all arranged in substantially parallel vertical planes. The gas collector 14 is centrally located between the metal plates 16 and is provided with a gas outlet 24 on a top surface thereof.

The plurality of metal plates 16 are arranged so that at least one metal plate 16 is located on each side of the gas collector 14, and each metal plate 16 is provided with at least one hole in an upper region of the plate 16 and at least one hole in a lower region of the plate 16. The two end plates 18 are located at opposite ends of the unit 12, and the plurality of non-conductive spacers 20 are located so that each metal plate 16 has a spacer 20 on each side. The power supply 22 is connected to two different metal plates 16, one on each side of the gas collector 14.

The gas collector 14 is provided with a fluid inlet 30 in a lower region of the gas collector 14. Essentially the electrolyte 38 is introduced into the unit 12 via the fluid inlet 30 and when current is provided from the power supply 22, then the gas 40 that is generated is outputted via the gas outlet 24 on the top surface of the gas collector 14. The holes in the metal plates 16 allow the electrolyte 38 to flow through the unit 12 and allow the gas produced to circulate through the unit 12 until it reaches the gas collector 14, where it can be outputted via the gas outlet 24.

The unit 12 is provided with a plurality of metal plates 16 on both sides of the gas collector 14 and at least one metal plate 16 on each side of the gas collector 14 is not connected to the power supply 22. Figure 6 shows two such metal plates 16 (not to scale and with the intermediate spacer removed for ease of understanding) in perspective to illustrate the positioning and structure of the metal plates 16 within the unit 12. Each metal plate 16 is provided with three holes 26 in an upper region of the plate 16 and three holes 28 in a lower region of the plate 16.

The power supply 22 is connected to one metal plate 16 on each side of the gas collector 14. Each metal plate 16 that is connected to the power supply 22 comprises a connecting tag 36, located at a bottom edge of the metal plate 16, to which the power supply 22 is connected. The neutral plates 16 do not have the connecting tag 36. Figure 5 shows an embodiment with one neutral plate 16 on either side of the central gas collector 14, but there could be additional metal plates 16, for example with three plates 16 on either side of the central gas collector 14, one of which is connected to the power supply 22 and the other two of which are neutral plates. The polarity of the power supply 22 can be reversed periodically. The power supply 22 can be arranged to provide, for example, 108 Watts at 12 Volts and 9 Amps or 216 Watts at 24 Volts and 9 Amps.

The spacing between the metal plates 16 is created by 3mm spacers with O-rings 20 which are essentially gasket carriers with O-ring seals that run along the perimeter of the metal plates 16 to provide an effective seal. The gasket carriers provide the optimum spacing between metal plates 16 for gas production within the unit 12. The space between the metal plates 16 is filled with the electrolyte 38 that flows around the unit 12 through the holes 26 and 28 in the metal plates 16. Of course, the end plates 18 that close the unit 12 do not have any holes in them. As the gas 40 is produced during the process of electrolysis, then the gas 40 can flow through the upper holes 26 back to the gas collector 14 to exit the unit 12.

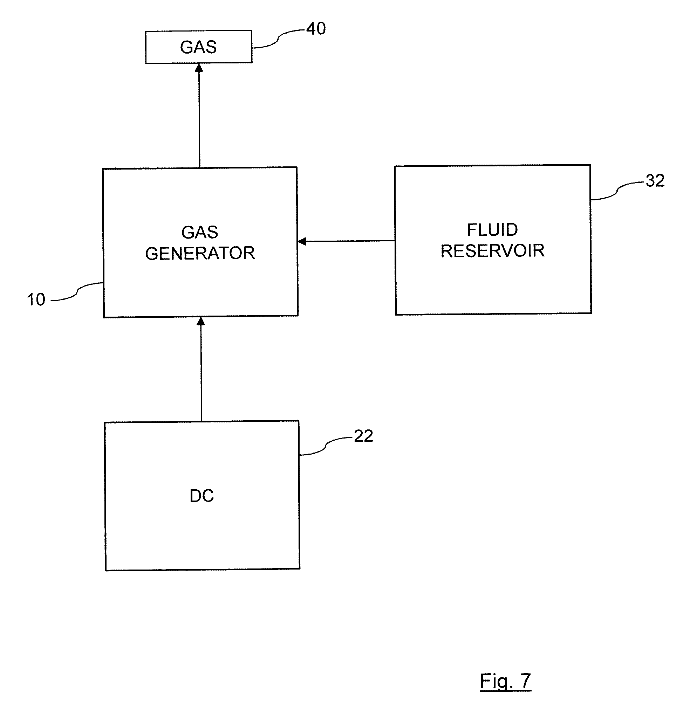

The gas generator 10, which is normally comprised of multiple units 12, is connected to the fluid reservoir 32, which contains the electrolyte 38, and is connected to the fluid inlet 30. This is illustrated schematically in Figure 7. The power supply 22 supplies DC current to the gas generator 10 and the fluid reservoir 32 supplies the electrolyte to the gas generator 10. The power supply 22 supplies a direct current to the connected metal plates 16 of the gas generator 10, which provides the energy for the process of electrolysis that takes place inside the gas generator 10. The power supply 22 will not be directly connected to the gas generator 10, the power regulator 102 is intermediate these two components.

The electrolyte 38 that is used in the gas generator 10 is preferably an H₂0 (water) solution that has sufficient ions present, for example through the addition of one or more suitable salts. Once the DC current is supplied to the metal plates 16 of the gas generator 10, then electrolysis of the water solution will take place and H₂ (hydrogen) and O₂ (oxygen) gas will be produced from the gas outlet 24. This gas 40 can then be provided for immediate use. As discussed above, the gas generator 10 is intended to be used in a combustion system, for example a suitable vehicle such as a lorry or boat or in a heating system such as a gas fired boiler used domestically or commercially.

If the gas generator 10 is to be used in a combustion system then the gas generated, which is a mixture of hydrogen and oxygen, is delivered as close to the fuel combustion chamber as possible. Since all combustion systems require oxygen to function, then in general there will be an air inlet to the combustion system that is used to deliver oxygen to the ignition. The gas outlet 24 can be connected to the air inlet of the combustion system and this will provide the hydrogen and oxygen directly into that combustion system to improve the efficiency of that system and also to reduce the pollution output of that system.

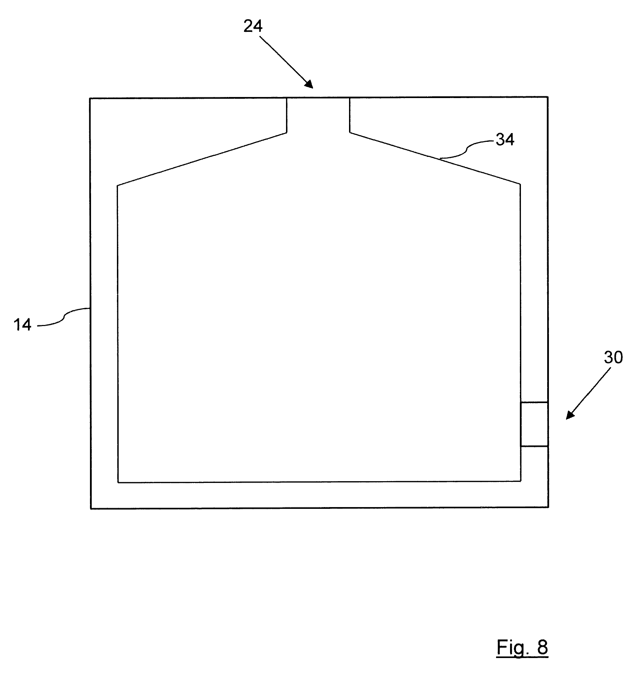

Figure 8 shows a vertical cross-section through the gas collector 14, which has an internal profile of a funnel shape, with sloping sides 34 sloping upwards to the gas outlet 24. The central gas collector 14 collects and outputs the gas that is generated by the electrolysis of the electrolyte 38 within the gas generator 10. The gas outlet 24 is centrally located on the top surface of the gas collector 14 and the sloping sides 34 funnel the gas upwards (which obviously rises in a liquid) to the gas outlet 24. This provides an effective and efficient removal of the gas from the gas generator 10 as it is produced by the electrolysis.

The gas collector 14 is essentially a 25mm ring of material such as plastics with a fluid inlet 30 at the bottom and a gas outlet 24 at the top, the ring of material defining an open chamber for the electrolyte 38. The sides of the gas collector 14 are open, with a spacer plus O-ring 20 sealing the connection between the gas collector 14 and an adjacent metal plate 16, one on each side of the gas collector 14. The metal plate 16 on each side that is closest to the gas collector 14 may be a neutral plate or may be positive or negative plate that is connected to the power supply 22.

Each unit 12 of the gas generator 10 is designed with the gas collector 14 in the middle of a horizontal row of metal plates 16 that are separated by the spacers with O-rings 20, with an end plate 18 at each end of the row. The internal metal plates 16 (not the end plates 18) are each provided with holes at lower and upper locations. These holes allow the fluids (the electrolyte 38 and the produced gas 40) to flow within the body of the units 12, with the electrolyte 38 flowing outwards from the gas collector 12 through the lower holes and the generated gas 40 flowing inwards back to the gas collector 14 through the upper holes. This creates an even flow around the units 12 of the gas generator 10.

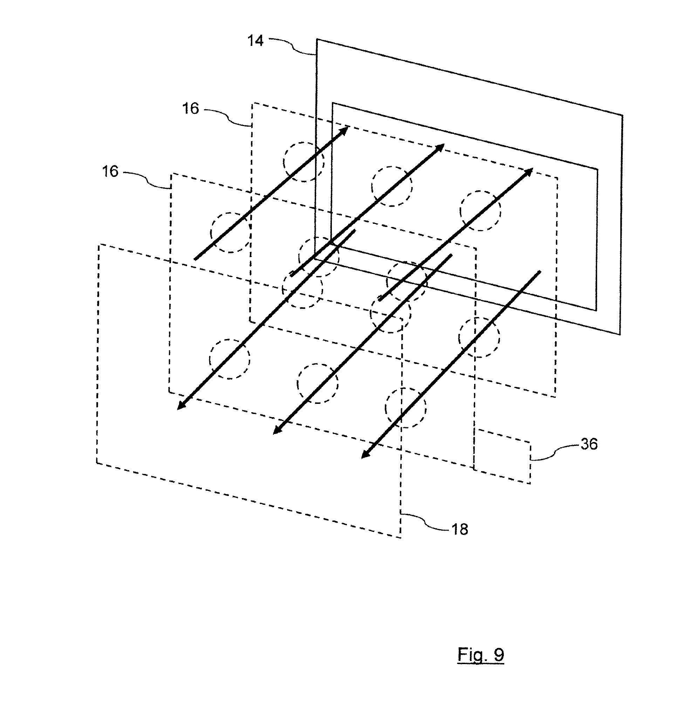

Figure 9 shows a view similar to Figure 6 of some of the internal components of the gas generator 10. The components are an end plate 18, two metal plates 16 and a side view of the edge of the gas collector 14. These components are not drawn to scale and are shown in exploded view with the spacers with O-rings 20 removed for ease of understanding. The arrows in the Figure illustrate the fluid flow inside the gas generator 10. One of the metal plates 16 is connected to the power supply 22 via the tag 36. The other metal plate 16 shown is a neutral plate not connected to the power supply 22.

Since each unit 12 of the gas generator 10 is symmetrical, the other side of the gas collector 14 is configured and arranged in the same manner; with two metal plates 16 enclosed by an end plate 18 on the outside, with spacers with O-rings 20 in-between the metal plates 16 and their adjacent components. The fluid flow on the other side of the gas collector 14 is exactly the same as shown in Figure 9. The holes in the metal plates 16 allow the flow of electrolyte and generated gas throughout the gas generator 10. The metal plate 16 on the other side of the gas collector 14 that is connected to the power supply 22 is connected to the opposite pole of the power supply 22.

As DC current is supplied to the two metal plates 16 (one on each side of the gas collector 14), then the electrolysis of the aqueous ionic solution 38 within the units 12 of the gas generator 10 begins to take place. The gas 40 produced will rise to the top of the gas generator 10 and flow through the upper holes in the metal plates 16 back to the central gas collector 14, for exit through the gas outlet 24 at the top of the gas collector 14. This will draw the liquid 38 outwards from the gas collector 14 through the lower holes in the metal plates creating a smooth and even flow of fluid within the gas generator 10.

Although the gas generator 10 is shown as a single component producing gas from the electrolyte 38 under an electrolysis process, multiple units 12 can be used in series, to increase the amount of gas being produced. If multiple units 12 are being used then they can be physically arranged in a series, with a row of units 12 physically connected together, with the end plates 18 of two adjacent units 12 in contact (or constructed so that a single end plate 18 performs the same function for two adjacent units 12). Each individual unit 12 may have its own power supply 22 and fluid reservoir 32 or these may be shared, with a single power supply 22 providing DC current to all of the individual units 10 and a single fluid reservoir 32 being connected to the fluid inlets 30 of all the units 12.

## Claims

1. A fuel system (100) comprising:
o a gas generator (10) operable to generate hydrogen and oxygen gas (40) using electrolysis of an electrolyte (38),
o a fluid reservoir (32) connected to the gas generator (10) and arranged to supply the electrolyte (38) to the gas generator (10),
o a power regulator (102) connected to a power supply (22; 134) and arranged to regulate the received power from the power supply (22; 134), and
o a system control device (104) connected to the power regulator (102) and the gas generator (10), arranged to control the power supplied to the gas generator (10) from the power regulator (102) and arranged to periodically reverse the polarity of the power supplied to the gas generator (10).

2. A fuel system according to claim 1, wherein the system control device (104) is connected to the fluid reservoir (32) and is arranged to detect the fluid level in the fluid reservoir (32).

3. A fuel system according to claim 1 or 2, wherein the system control device (104) is connected to the power source (22; 134) and is arranged to monitor the available power at the power source (22; 134) and to draw power from the power source (22; 134) only if sufficient power is available.

4. A fuel system according to claim 1, 2 or 3, wherein the gas outlet (24) of the gas generator (10) is connected to the fluid reservoir (32) and supplies gas (40) to the fluid reservoir (32).

5. A fuel system according to claim 4, and further comprising a non-return valve (106) on a main gas outlet (116) of the fluid reservoir (32) preventing the electrolyte (38) exiting the fluid reservoir (32) via the main gas outlet (116).

6. A fuel system according to claim 4 or 5, and further comprising one or more anti-flashback devices (124) connected to a gas line (122) connected to the fluid reservoir (32).

7. A fuel system according to any preceding claim, wherein the fluid reservoir (32) is provided with a fluid inlet (108), the fluid inlet (108) located on a side of the fluid reservoir (32) below the top of the fluid reservoir (32).

8. A fuel system according to any preceding claim, wherein the gas generator (10) comprises one or more watertight and airtight units (12) comprising a gas collector (14) provided with a gas outlet (24) on a top surface thereof, a plurality of metal plates (16), at least one metal plate (16) located on each side of the gas collector (14), and each provided with at least one hole (26) in an upper region of the plate (16) and at least one hole (28) in a lower region of the plate (16), two end plates (18), located at opposite ends of the unit (12), and a plurality of non-conductive spacers (20), located so that each metal plate (16) has a spacer (20) on each side.

9. A fuel system according to claim 8, wherein the gas collector (14), the metal plates (16) and the end plates (18) are all substantially rectangular and are all arranged in substantially parallel vertical planes.

10. A fuel system according to claim 8 or 9, wherein the gas collector (14) is further provided with a fluid inlet (30) in a lower region of the gas collector (14), the fluid inlet (30) connected to the fluid reservoir (32).

11. A method of operating a fuel system (100), the method comprising the steps of:
o generating hydrogen and oxygen gas (40) from a gas generator (10) using electrolysis of an electrolyte (38),
o supplying the electrolyte (38) to the gas generator (10) from a fluid reservoir (32) connected to the gas generator (10),
o regulating the received power from a power supply (22; 134) at a power regulator (102) connected to the power supply,
o controlling the power supplied to the gas generator (10) from the power regulator (102) using a system control device (104) connected to the power regulator (102) and the gas generator (10), and
o periodically reversing the polarity of the power supplied to the gas generator (10).

12. A method according to claim 11, and further comprising detecting the fluid level in the fluid reservoir (32) with the system control device (104), which is connected to the fluid reservoir (32).

13. A method according to claim 11 or 12, and further comprising monitoring the available power at the power source (22; 134) with the system control device (104), which is connected to the power source (22; 134), and drawing power from the power source (22; 134) only if sufficient power is available.

14. A method according to any one of claims 11 to 13, and further comprising supplying the produced gas (40) from the gas generator (10) to the fluid reservoir (32).

15. A method according to claim 14, and further comprising supplying the produced gas (40) from the fluid reservoir (32) via a main gas outlet (116).
